# EUROPÄISCHE PATENTANMELDUNG

(11) **EP 1 148 319 A2**
(43) Veröffentlichungstag der Anmeldung: **24.10.2001**
(21) Anmeldenummer: 01105225.5
(22) Anmeldetag: 03.03.2001
(51) Int. Cl.: G01F 23/38

(54) **Füllstandsensor mit einer Stellungserfassungseinrichting**

(30) Priorität: 19.04.2000 DE 10019666
(71) Anmelder: Mannesmann VDO Aktiengesellschaft, 60388 Frankfurt am Main (DE)
(72) Erfinder: Eck, Karl, 60318 Frankfurt (DE)
(74) Vertreter: Barz, Torsten (DE)

(57) **Zusammenfassung**

Ein Füllstandsensor (2) für einen Kraftstoffbehälter (1) eines Kraftfahrzeuges hat zwei Hebelarme (4, 5). Einer der Hebelarme (4) trägt einen Schwimmer (10), während der andere Hebelarm (5) gegen den Boden des Kraftstoffbehälters (1) vorgespannt ist. Eine Erfassungseinrichtung (6) zur Ermittlung des Füllstandes im Kraftstoffbehälter (1) ermittelt die Differenz der Stellungen der Hebelarme (4, 5). Die Erfassung des Füllstandes im Kraftstoffbehälter (1) gestaltet sich hierdurch sehr genau.

## Beschreibung

Die Erfindung betrifft einen Füllstandsensor für einen Flüssigkeitsbehälter, insbesondere einen Kraftstoffbehälter für ein Kraftfahrzeug, mit einem einen Schwimmer tragenden Hebelarm, mit einem zur Befestigung in dem Flüssigkeitsbehälter vorgesehenen Träger zur Lagerung des Hebelarms und mit einer Erfassungseinrichtung zur Erfassung der Stellung des Schwimmers.

Solche Füllstandsensoren werden in Kraftstoffbehältern heutiger Kraftfahrzeuge eingesetzt und sind aus der Praxis bekannt. Um ein Heben und Senken des Bodens des Kraftstoffbehälters auszugleichen, wird der Träger des bekannten Füllstandsensors an einem gegen den Boden des Kraftstoffbehälters vorgespannten Bauteil wie beispielsweise einem Schwalltopf befestigt. Hierdurch soll gewährleistet werden, dass die Stellung des Schwimmers dem Füllstand im Flüssigkeitsbehälter entspricht.

Nachteilig bei dem bekannten Füllstandsensor ist, dass durch den großen Abstand zwischen dem gegen den Boden vorgespannten Bereich und dem Schwenkbereich des Schwimmers eine Nullstellung des Hebelarms nicht zuverlässig festgestellt werden kann. Die Erfassung der Nullstellung des Schwimmers wird zudem dadurch erschwert, dass das Bauteil, an dem der Träger befestigt ist, kippen kann oder dass bei einem Verzug des Bodens sich der Neigungswinkel des den Träger halternden Bauteils ändert. Deshalb läßt sich der Füllstand in dem Flüssigkeitsbehälter mit dem bekannten Füllstandsensor nicht zuverlässig bestimmen. Insbesondere heutige aus Kunststoff gefertigte Kraftstoffbehälter können sich bei Wärmeausdehnungen und in Abhängigkeit vom Füllstand stark verformen.

Der Erfindung liegt das Problem zugrunde, einen Füllstandsensor der eingangs genannten Art so zu gestalten, dass er den Füllstand insbesondere in einem Kraftstoffbehälter besonders genau erfassen kann.

Dieses Problem wird erfindungsgemäß durch einen zweiten, zur Vorspannung gegen einen Boden des Flüssigkeitsbehälters im Bereich des Schwimmers vorgesehenen Hebelarm und einer Erfassungseinrichtung zur Ermittlung der Stellung des zweiten Hebelarms gelöst.

Durch diese Gestaltung lässt sich die Füllhöhe im Flüssigkeitsbehälter durch Ermittlung der Differenz der Stellungen der Hebelarme mit einer besonders hohen Genauigkeit ermitteln. Da der zweite Hebelarm die Lage des Bodens in dem Bereich des Schwimmers ermittelt, führt eine geringfügig gekippte Anordnung des Trägers nur zu unwesentlichen Verfälschungen des ermittelten Füllstandes. Der Füllstand im Kraftstoffbehälter lässt sich hierdurch besonders genau erfassen. Ein weiterer Vorteil dieser Gestaltung besteht darin, dass der Träger nicht mehr wie bei dem bekannten Füllstandsensors an einem gegen den Boden vorgespannten Bauteil befestigt sein muss. Der Träger kann hierdurch unmittelbar an der Wandung des Flüssigkeitsbehälters befestigt werden. Dies führt insbesondere bei als Mehrkammertank ausgebildeten Kraftstoffbehältern zu einer wesentlichen Vereinfachung der Montage, da hierbei jeder der Kammern einen Füllstandsensor benötigt.

Die Erfassungseinrichtung für den zweiten Hebelarm könnte beispielsweise einen Potentiometer aufweisen. Solche Potentiometer sind jedoch schwierig gegenüber den chemischen Einflüssen der Flüssigkeit zu schützen und sind daher sehr störanfällig. Elektrische Kontakte der Erfassungseinrichtung lassen sich jedoch gemäß einer vorteilhaften Weiterbildung der Erfindung einfach gegenüber der Flüssigkeit in dem Flüssigkeitsbehälter kapseln, wenn der zweite Hebelarm zur Verstellung zumindest eines Magneten gestaltet ist und wenn die Erfassungseinrichtung einen Magnetsensor aufweist. Als Magnetsensor können beispielsweise passive magnetische Positionssensoren, wie sie in der DE 196 48 539 A1 offenbart sind, eingesetzt werden. Darüber hinaus sind aber auch Hall-Elemente, Reedkontakte oder ähnliche Sensoren denkbar. Diese Sensoren haben den Vorteil, dass sie diagnosefähig sind. Durch eine entsprechende Gestaltung einer Elektronik der Erfassungseinrichtung lassen sich zudem beispielsweise Referenzpunkte abfragen oder abgleichen.

Der erfindungsgemäße Füllstandsensor könnte beispielsweise eine zweite Erfassungseinrichtung zur Erfassung der Auslenkung des zweiten Hebelarms aufweisen. Der erfindungsgemäße Füllstandsensor erfordert jedoch nur eine einzige Erfassungseinrichtung, wenn die Erfassungseinrichtung zur Ermittlung der Differenz der Auslenkungen der Hebelarme gestaltet ist.

Die Erfassungseinrichtung zur Ermittlung der Differenz der Auslenkungen der Hebelarme gestaltet sich gemäß einer anderen vorteilhaften Weiterbildung der Erfindung konstruktiv besonders einfach, wenn von den beiden Hebelarmen verstellbare Magnete jeweils einander mit entgegengesetzter Polarisation gegenüberstehen und wenn zwischen dem Bewegungsbereich der Magnete der Magnetsensor angeordnet ist.

Der erfindungsgemäße Füllstandsensor benötigt besonders wenige zu montierende Bauteile, wenn der zweite Hebelarm einen zur Bildung einer Lagerachse der Lagerung in dem Träger abgewinkelten Hebeldraht hat.

Eine Beschädigung des Bodens des Flüssigkeitsbehälters durch den zweiten Hebelarm lässt sich gemäß einer anderen vorteilhaften Weiterbildung der Erfindung einfach vermeiden, wenn der Hebeldraht in seinem zur Anlage an dem Boden vorgesehenen Bereich eine Biegung hat. Der Boden des Flüssigkeitsbehälters kann zusätzlich eine Gleitbahn aufweisen.

Da der Flüssigkeitsbehälter, insbesondere der Kraftstoffbehälter, häufig ein kompliziert geformter Behälter ist, ist der Zusammenhang zwischen Füllhöhe und Füllmenge im Behälter nicht linear. Die Ermittlung der Füllmenge mit dem erfindungsgemäßen Füllstandsensor erfordert einen besonders geringen Aufwand, wenn der zweite Hebelarm eine Kurvenscheibe zur Verstellung des Magneten aufweist.

Eine zuverlässige Anlage des zweiten Hebelarms an dem Boden sowie des Magneten an der Kurvenscheibe lässt sich gemäß einer anderen vorteilhaften Weiterbildung der Erfindung einfach sicherstellen, wenn der Magnet des zweiten Hebelarms mittelbar oder unmittelbar gegen die Kurvenscheibe vorgespannt ist.

Die Anzahl der zu montierenden Bauteile des erfindungsgemäßen Füllstandsensors lässt sich besonders gering halten, wenn der Magnet des zweiten Hebelarms als Kurvenscheibe ausgebildet ist.

Zur weiteren Vereinfachung des Aufbaus des erfindungsgemäßen Füllstandsensors trägt es bei, wenn der Träger einen in einer Öffnung des Kraftstoffbehälters einsetzbaren Flansch und jeweils Führungen für die Magnete der Hebelarme und eine gegenüber dem Kraftstoffbehälter abgedichtete Ausnehmung zur Aufnahme des Magnetsensors aufweist. Weiterhin trägt dies zur Vereinfachung der Montage des erfindungsgemäßen Füllstandsensors in dem Flüssigkeitsbehälter bei.

Die Montage des erfindungsgemäßen Füllstandsensors gestaltet sich besonders einfach, wenn der Hebeldraht im Bereich der Kurvenscheibe eine Abwinklung aufweist und wenn die Kurvenscheibe mit dem Hebeldraht verklipst ist.

Die Erfindung lässt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig.1: einen erfindungsgemäßen, in einem Kraftstoff- behälter montierten Füllstandsensor,
- Fig.2: eine weitere Ausführungsform des erfindungs- gemäßen Füllstandsensors.

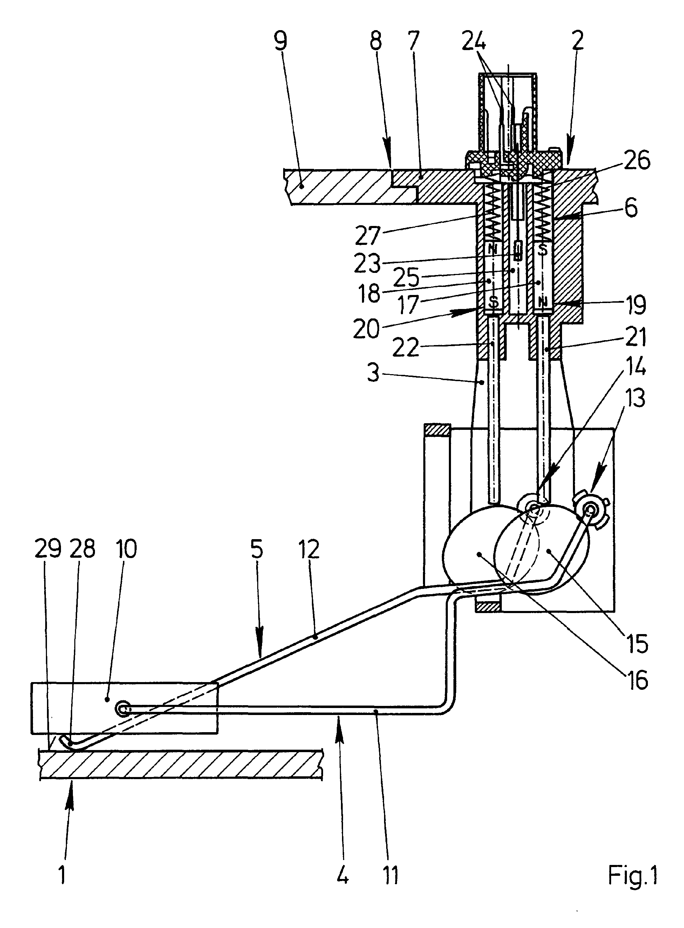

Figur 1 zeigt einen in einem Kraftstoffbehälter 1 eines Kraftfahrzeuges montierten Füllstandsensor 2. Der Füllstandsensor 2 hat einen Träger 3 zur Lagerung zweier Hebelarme 4, 5 und zur Aufnahme einer Erfassungseinrichtung 6 für die Stellung der Hebelarme 4, 5. Ein Flansch 7 des Trägers 3 ist in einer Öffnung 8 einer Wandung 9 des Kraftstoffbehälters 1 befestigt. Einer der Hebelarme 4 trägt einen Schwimmer 10, während der zweite Hebelarm 5 gegen den Boden des Kraftstoffbehälters 1 vorgespannt ist. Der Schwimmer 10 folgt einem Kraftstoffspiegel in dem Kraftstoffbehälter 1. Die Hebelarme 4, 5 weisen jeweils einen Hebeldraht 11, 12 auf, mit dem sie in Lagerungen 13, 14 des Trägers 3 eindringen. Auf den Hebeldrähten 11, 12 sind jeweils Kurvenscheiben 15, 16 befestigt. An den Kurvenscheiben 15, 16 stützen sich Magnete 17, 18 in Führungen 19, 20 des Trägers 3 verschiebende Stößel 21, 22 ab.

Die Magnete 17, 18 stehen sich mit einander entgegengesetzten Polungen gegenüber. Die Erfassungseinrichtung 6 hat einen zwischen den beiden Magneten 17, 18 angeordneten Magnetsensor 23. Der Magnetsensor 23 ermittelt die Summe der magnetischen Feldstärken der Magnete 17, 18 und leitet elektronische Signale zu auf der Außenseite des Kraftstoffbehälters 1 angeordneten Anschlusskontakten 24. Die elektronischen Signale des Magnetsensors 23 entsprechen damit der Differenz der Stellungen der Hebelarme 4, 5 und damit bei entsprechender geometrischer Gestaltung der Kurvenscheiben 15, 16 der Füllmenge an Kraftstoff in dem Kraftstoffbehälter 1.

Der Magnetsensor 23 ist in einer gegenüber dem Kraftstoffbehälter 1 gekapselten Ausnehmung 25 angeordnet. Innerhalb der Führungen 19, 20 der Magnete 17, 18 sind Federn 26, 27 angeordnet. Selbstverständlich können die Magnete 17, 18 auch unmittelbar und damit ohne Zwischenschaltung der Stößel 21, 22 an den Kurvenscheiben 15, 16 anliegen. Der Hebeldraht 12 des zweiten Hebelarms 5 hat in seinem an dem Boden des Kraftstoffbehälters 1 anliegenden Bereich eine Biegung 28. Der Boden hat in diesem Bereich eine Gleitbahn 29.

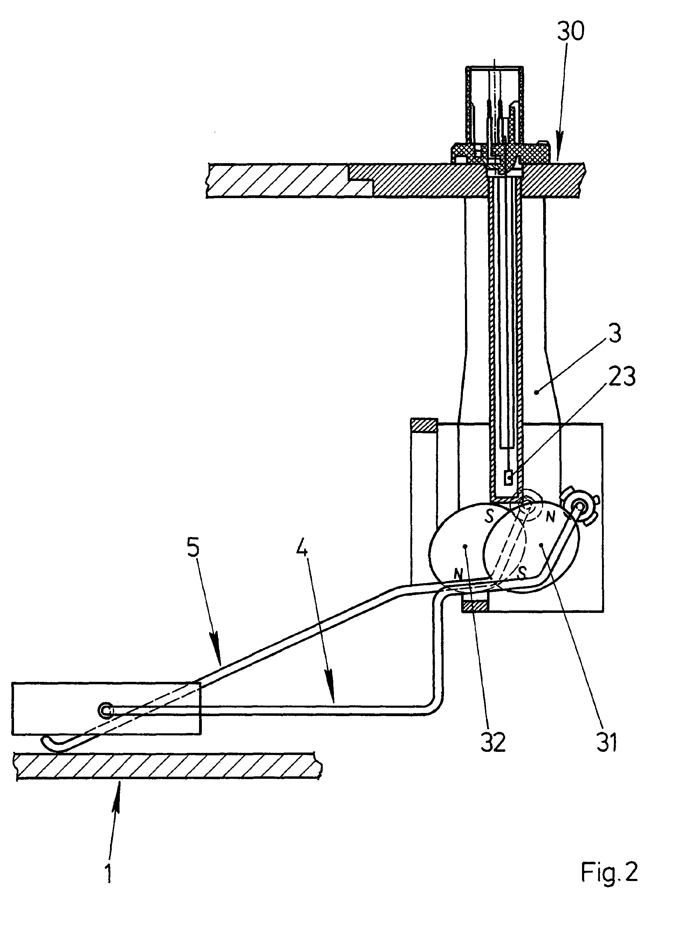

Figur 2 zeigt einen Füllstandsensor 30 in einer weiteren Ausführungsform. Dieser Füllstandsensor 30 unterscheidet sich von dem aus Figur 1 vor allem dadurch, dass die Hebelarme 4, 5 magnetische Kurvenscheiben 31, 32 aufweisen. Die Kurvenscheiben 31, 32 weisen einander entgegengesetzte Polungen auf. Der Magnetsensor 23 ist zwischen den Kurvenscheiben 31, 32 angeordnet und ermittelt die Summe der magnetischen Feldstärken und damit die Differenz der Stellungen der Hebelarme 4, 5.

## Patentansprüche

1. Füllstandsensor für einen Flüssigkeitsbehälter, insbesondere einen Kraftstoffbehälter für ein Kraftfahrzeug, mit einem einen Schwimmer tragenden Hebelarm, mit einem zur Befestigung in dem Flüssigkeitsbehälter vorgesehenen Träger zur Lagerung des Hebelarms und mit einer Erfassungseinrichtung zur Erfassung der Stellung des Schwimmers, **gekennzeichnet durch** einen zweiten, zur Vorspannung gegen einen Boden des Flüssigkeitsbehälters im Bereich des Schwimmers (10) vorgesehenen Hebelarm (5) und einer Erfassungseinrichtung (6) zur Ermittlung der Stellung des zweiten Hebelarms (5).

2. Füllstandsensor nach Anspruch 1, **dadurch gekennzeichnet, dass** der zweite Hebelarm (5) zur Verstellung zumindest eines Magneten (18) gestaltet ist und dass die Erfassungseinrichtung (6) einen Magnetsensor (23) aufweist.

3. Füllstandsensor nach Anspruch 1 oder 2, **dadurch gekennzeichnet, dass** die Erfassungseinrichtung (6) zur Ermittlung der Differenz der Auslenkungen der Hebelarme (4, 5) gestaltet ist.

4. Füllstandsensor nach zumindest einem der vorhergehenden Ansprüche, **dadurch gekennzeichnet, dass** von den beiden Hebelarmen (4, 5) verstellbare Magnete (17, 18) jeweils einander mit entgegengesetzter Polarisation gegenüberstehen und dass zwischen dem Bewegungsbereich der Magnete (17, 18) der Magnetsensor (23) angeordnet ist.

5. Füllstandsensor nach zumindest einem der vorhergehenden Ansprüche, **dadurch gekennzeichnet, dass** der zweite Hebelarm (5) einen zur Bildung einer Lagerachse der Lagerung (14) in dem Träger (3) abgewinkelten Hebeldraht (12) hat.

6. Füllstandsensor nach zumindest einem der vorhergehenden Ansprüche, **dadurch gekennzeichnet, dass** der Hebeldraht (12) in seinem zur Anlage an dem Boden vorgesehenen Bereich eine Biegung (28) hat.

7. Füllstandsensor nach zumindest einem der vorhergehenden Ansprüche, **dadurch gekennzeichnet, dass** der zweite Hebelarm (5) eine Kurvenscheibe (16) zur Verstellung des Magneten (18) aufweist.

8. Füllstandsensor nach zumindest einem der vorhergehenden Ansprüche, **dadurch gekennzeichnet, dass** der Magnet (18) des zweiten Hebelarms (5) mittelbar oder unmittelbar gegen die Kurvenscheibe (16) vorgespannt ist.

9. Füllstandsensor nach zumindest einem der vorhergehenden Ansprüche, **dadurch gekennzeichnet, dass** der Magnet des zweiten Hebelarms (5) als Kurvenscheibe (32) ausgebildet ist.

10. Füllstandsensor nach zumindest einem der vorhergehenden Ansprüche, **dadurch gekennzeichnet, dass** der Träger (3) einen in einer Öffnung (8) des Kraftstoffbehälters (1) einsetzbaren Flansch (7) und jeweils Führungen (19, 20) für die Magnete (17, 18) der Hebelarme (4, 5) und eine gegenüber dem Kraftstoffbehälter (1) abgedichtete Ausnehmung (25) zur Aufnahme des Magnetsensors (23) aufweist.

11. Füllstandsensor nach zumindest einem der vorhergehenden Ansprüche, **dadurch gekennzeichnet, dass** der Hebeldraht (11, 12) im Bereich der Kurvenscheibe (15, 16, 31, 32) eine Abwinklung aufweist und dass die Kurvenscheibe (15, 16, 31, 32) mit dem Hebeldraht (11, 12) verklipst ist.
